# EUROPÄISCHE PATENTSCHRIFT

(11) **EP 0 963 523 B1**
(45) Veröffentlichungstag und Bekanntmachung des Hinweises auf die Patenterteilung: **19.11.2003**
(21) Anmeldenummer: 98908073.4
(22) Anmeldetag: 09.02.1998
(51) Int. Cl.: F16G 13/16

(54) **ENERGIEFÜHRUNGSKETTE MIT KETTENGLIEDERN, DIE EINEN KERN HOHER FESTIGKEIT AUFWEISEN SOWIE EIN VERFAHREN ZUR HERSTELLUNG EINES SOLCHEN KETTENGLIEDES**
ENERGY SUPPLY CHAIN WITH EXTRA TOUGH CORE CHAIN LINKS AND METHOD FOR THE PRODUCTION OF ONE SUCH CHAIN LINK
CHAINE DE CONDUITE D'ENERGIE CONSTITUEE DE MAILLONS AVEC AME A HAUTE RESISTANCE AINSI QUE PROCEDE DE PRODUCTION DE TELS MAILLONS

(30) Priorität: 27.02.1997 DE 19707966
(43) Veröffentlichungstag der Anmeldung: 15.12.1999
(73) Patentinhaber: Kabelschlepp Gesellschaft mit beschränkter Haftung, 57074 Siegen (DE)
(72) Erfinder: WEHLER, Herbert, D-57290 Neunkirchen (DE)
(74) Vertreter: Kahlhöfer, Hermann, Dipl.-Phys.
(86) Internationale Anmeldenummer: EP9800704
(87) Internationale Veröffentlichungsnummer: WO98038440

(56) Entgegenhaltungen:
- EP-A- 0 154 882
- DE-A- 3 605 382
- DE-A- 3 619 049
- GB-A- 1 149 341
- US-A- 3 646 752

## Beschreibung

Der Gegenstand der Erfindung bezieht sich auf ein Kettenglied für Energieführungsketten, ein Verfahren zur Herstellung eines Kettengliedes sowie auf eine Energieführungskette.

Zur Führung von Versorgungsleitungen von einem ortsfesten Anschluß zu einem beweglichen Anschluß ist es bekannt sogenannte Energieführungsketten zu verwenden. Die Energieführungsketten sind durch Kettenglieder gebildet, die miteinander gelenkig verbunden sind. Die Kettenglieder begrenzen einen Aufnahmeraum der Energieführungskette, in dem die Versorgungsleitungen verlegt werden. Bei den Versorgungsleitungen kann es sich beispielsweise um elektrische Leitungen, Druckluftleitungen oder Schläuche handeln.

Es ist bekannt, daß die Kettenglieder aus einem metallischen Werkstoff hergestellt werden. Bei solchen metallischen Energieführungsketten handelt es sich überwiegend um Spezialketten, die in ausgewählten Bereichen verwendet werden.

Desweiteren sind Energieführungsketten bekannt, deren Kettenglieder aus einem Kunststoff hergestellt sind. Energieführungsketten mit Kunststoffkettengliedern weisen gegenüber den bekannten Energieführungsketten aus einem metallischen Werkstoff den Nachteil auf, daß eine freitragende Länge einer Kunstsionenergieführungskette im Vergleich zu metallischen Ketten geringer ist. Diese Problematik ist bereits erkannt worden. Durch die EP 0 154 882 B1, ist eine Energieführungskette aus Kunststoff bekannt, die für größere Leitungsgewichte und/oder freitragende Längen zusätzlich zu aneinanderliegenden Flächen zwischen Gelenkzapfen und Gelenkbohrung, Langlöcher und Anschlagzapfen auch noch eine Abstützung zwischen einem verhältnismäßig großen Flächen am Außenrand eines Aufbaus und im Innenrand eine Aufnahme der benachbarten Kettenglieder hat.

Der vorliegenden Erfindung liegt die Aufgabe zugrunde ein Kettenglied für Energieführungsketten zum Führen von Versorgungsleitungen anzugeben, welches auch hohen Belastungen standhält. Ein weiteres Ziel der Erfindung ist es eine Energieführungsketten anzugeben, die große freitragende Längen zuläßt. Ein weiteres Ziel der Erfindung ist es ein Verfahren anzugeben, durch das Kettengliedteile für Kettenglieder einfach und sicher herstellbar sind.

Diese Aufgaben werden erfindungsgemäß durch ein Kettenglied mit den Merkmalen des Anspruchs 1, ein Verfahren mit den Merkmalen des Anspruchs 17 sowie eine Energieführungskette mit den Merkmalen des Anspruchs 29 gelöst. Vorteilhafte Weiterbildungen sind Gegenstand der Unteransprüche.

Das erfindungsgemäße Kettenglied für Energieführungsketten zum Führen von Versorgungsleitungen weist zwei voneinander beabstandete einander gegenüberliegende laschenförmige Kettengliedteile und wenigstens eine mit den Kettengliedteilen verbundene Traverse auf. Das Kettenglied zeichnet sich dadurch aus, daß mindestens ein Kettenglied einen Kern und einen wenigstens teilweise den Kern umgebenden Kernmantel hat, wobei der Kern so ausgebildet ist, daß dieser gegenüber dem Kernmantel eine höhere Festigkeit aufweist. Durch diese erfindungsgemäße Ausgestaltung des Kettengliedes wird eine funktionale Trennung des Kettengliedes erreicht. Während der Kern des Kettengliedes im wesentlichen die Festigkeit des Kettengliedes bestimmt, übernimmt der den Kern umgebende Kernmantel andere Aufgaben, z. B. eine geräuscharme Bewegung der Kette.

Der Kern des Kettengliedes weist vorzugsweise wenigstens eine makroskopische Struktur auf, die eine hohe mechanische Festigkeit hat. Bevorzugt ist hierbei die Ausgestaltung des Kerns in Form einer Wabenstruktur. Wabenstrukturen haben aufgrund ihrer Ausgestaltung eine relativ hohe mechanische Festigkeit. Ein weiterer Vorteil einer wabenförmigen Struktur als einen Kern kann darin gesehen werden, daß das Gewicht eines Kettengliedes verringert wird.

Statt oder zusätzlich zu einer strukturell vorteilhaften Ausgestaltung des Kerns, der eine hohe mechanische Festigkeit aufweist, kann durch geeignete Materialwahl die Festigkeit des Kerns gegenüber dem Kernmantel erhöht werden. So wird beispielsweise vorgeschlagen, daß der Kern aus wenigstens einem ersten Werkstoff besteht, der gegenüber einem zweiten Werkstoff des Kernmantels eine höhere Festigkeit, insbesondere, ein größeres Elastizitätsmodul, aufweist.

Bevorzugt besteht der Kern aus wenigstens einem Werkstoff, der gegenüber wenigstens einem zweiten Werkstoff des Kernmantels ein mindestens fünfmal, vorzugsweise zehnmal so großes Elastizitätsmodul aufweist.

Nach einem weiteren vorteilhaften Gedanken wird vorgeschlagen, daß der Kern einen mehrschichtigen Aufbau aufweist. Der Aufbau ist vorzugsweise durch wenigstens zwei Lagen aus unterschiedlichen Werkstoffen gebildet. Hierdurch wird ein Kern in Form eines Laminats erhalten, der durch geeignete Werkstoffauswahl eine hohe Festigkeit aufweist.

Bevorzugt ist eine Ausgestaltung des Kettengliedes, bei dem der Kern mindestens teilweise aus wenigstens einem metallischen Werkstoff besteht. Der Kern ist vorzugsweise teilweise aus einem Leichtmetall, insbesondere aus Aluminium oder einer Aluminiumlegierung, hergestellt. Der Elastizitätsmodul eines solchen Kerns ist im Vergleich zu den bisher üblich verwendeten glasfaserverstärkten Kunststoffkettengliedern ca. zehnmal höher. Hierdurch wird dem Kettenglied eine hohe Festigkeit verliehen. Andererseits wird bei der Verwendung eines Leichtmetalls als Kern für ein Kettenglied lediglich eine geringe Gewichtszunahme erzielt.

Zu einer weiteren Erhöhung der Tragfähigkeit der Kettenglieder wird vorgeschlagen, daß der Kern wenigstens teilweise aus Stahl oder aus einer Stahllegierung besteht. Vorzugsweise ist der Kern einteilig ausgebildet. Der Kern kann aus einer Metallplatte ausgestanzt werden.

Nach einer weiteren vorteilhaften Weiterbildung wird vorgeschlagen, daß der Kernmantel den Kern vollständig umgibt. Durch diese Ausgestaltung wird gleichzeitig eine gewisse Schutzbeschichtung des Kerns erreicht. Wird eine Energieführungskette, die aus den erfindungsgemäßen Kettengliedern aufgebaut ist, in einer aggressiven Atmosphäre verwendet, so tritt keine Zerstörung des Kerns ein. Vorzugsweise ist der Kernmantel aus wenigstens einem Kunststoff gebildet. Die Verwendung eines Kunststoffes als Kernmantel hat auch den Vorteil, daß während des Betriebes der Energieführungskette keine übermäßige Schallentwicklung eintritt, wenn Kettengliedteile aus einem metallischen Werkstoff bestehen. Durch geeignete Auswahl von Kunststoffen kann aus den Kettengliedern eine Energieführuntgskette aufgebaut werden, die an den Verwendungszweck angepaßt wird.

Vorzugsweise entspricht die Gestalt des Kerns im wesentlichen einer Form eines Kettengliedteils.

Nach einem anderen erfindungsgemäßen Gedanken wird ein Verfahren zum Herstellen eines laschenförmigen Kettengliedteils eines Kettengliedes der Energieführungskette zum Führen der Versorgungsleitungen, vorzugsweise für ein Kettenglied nach einem der Ansprüche 1 bis 16, vorgeschlagen, bei dem ein laschenförmigen Kern eines Kettengliedes ausgebildet und der Kern mit einem diesen wenigstens teilweise umgebenden Kernmantel versehen wird, wobei der Kern so ausgebildet wird, daß dieser gegenüber dem Kernmantel eine höhere Festigkeit aufweist. Vorzugsweise wird der Kern aus wenigstens einem ersten Werkstoff gebildet, der gegenüber wenigstens einem zweiten Werkstoff des Kernmantels eine höhere Festigkeit, insbesondere ein größereres Elastizitätsmodul, aufweist.

Dadurch, daß zunächst der Kern, der die Festigkeit des Kettengliedes bestimmt, ausgebildet wird und anschließend der Kern von einem Kernmantel umgeben wird, kann auch eine Anpassung der laschenförmigen Kettengliedteile und somit der Kettenglieder an unterschiedliche Aufgaben einer Energieführungskette angepaßt werden. Durch geeignete Werkstoffwahl des Kernmantels kann die Gleiteigenschaft des Kettengliedes auf einer Auflage positiv beeinflußt werden. Ferner kann der Kernmantel eine Schutzbeschichtung bilden, der gegenüber aggressiven Medien resistent ist. Hierdurch wird die Einsatzvielfalt einer Energieführungskette vergrößert. Die Herstellung solcher laschenförmigen Kettengliedteile und somit auch der Kettenglieder wird auch wirtschaftlich positiv beeinflußt, da der Kern aus einem hochfesten Material bestehen kann, der preisgünstig ist. Es ist nicht mehr notwendig, daß das gesamte Kettenglied aus einem teuren Werkstoff hergestellt wird, der beispielsweise gegenüber der Umgebungsatmosphäre resistent sein muß.

Die Herstellung des Kerns umfaßt auch die Ausbildung von Bohrungen, Ausnehmung oder desgleichen bevor der Kern mit einem Kemmantel versehen wird. Hierdurch wird sichergestellt, daß der Kern vollständig von dem Kernmantel umgeben wird.

Bevorzugt wird ein Verfahren, bei dem der Kern aus einem Ausgangsmaterial, insbesondere einem metallischen Werkstoff, herausgetrennt wird. Ein Heraustrennen des Kerns erfolgt insbesondere durch Stanzen. Stanzen stellt einen spannlosen Bearbeitungsvorgang dar, der einfach und mit einem relativ geringen Aufwand erfolgen kann. Mit dem Stanzvorgang können auch gleichzeitig alle notwendigen Öffnungen in den Kern eingebracht werden. Bei komplizierteren Konturen und Ausgestaltungen des Kerns kann es zweckmäßig sein bestimmte Aussparungen vor oder nach einem Stanzvorgang oder desgleichen in den Kern einzubringen.

Nach einem weiteren erfindungsgemäßen Gedanken wird eine Energieführungskette mit wenigstens einem Kettenglied nach einem der Ansprüche 1 bis 16 vorgeschlagen, wobei jedes laschenförmige Kettengliedteil jeweils zwei voneinander beabstandete quer zur Längserstreckung des Kettengliedes verlaufende Gelenkbohrungen, die jeweils von wenigstens einer bogenförmigen Ausnehmung umgeben ist, aufweist. Zur Verbindung der benachbarten Kettenglieder wird wenigstens ein Verbindungsteil aus Kunststoff vorgeschlagen. Das Verbindungsteil weist wenigstens ein Positionierelement auf, das in die Ausnehmung des Kettengliedes hineinragt. Die Außenkontur des Positionierelementes ist so ausgebildet, daß durch das Positionierelement das Verbindungsteil an dem Kettengliedteil festgelegt wird, wodurch eine Relativbewegung zwischen dem Verbindungsteil und dem Kettengliedteil verhindert wird. Das Verbindungsteil weist ferner wenigstens ein Anschlagelement auf, das in die Ausnehmung eines Kettengliedteils eines benachbarten Kettengliedes hineinragt. Die Ausgestaltung des Anschlagelementes und der Ausnehmung begrenzt einen Verschwenkwinkel der benachbarten Kettenglieder um einen gemeinsamen Gelenkbolzen, der sich durch die Gelenkbohrungen der Kettengliedteile erstreckt. Dadurch, daß das Verbindungsteil ein gesondertes Bauteil bildet, wird erreicht, dieses Verbindungsteil aufgrund von Verschließerscheinungen bei sehr hohen Belastungen relativ einfach austauschbart ist. Durch das Verbindungsteil aus Kunststoff wird auch der Verschleiß der Kettenglieder im Bereich der Gelenke verringert. Der prinzipielle Aufbau einer solchen Energieführungskette ist durch die DE 36 19 049 A1 bekannt.

Nach einem weiteren vorteilhaften Gedanken wird vorgeschlagen, daß bei einer Energieführungskette auf ein Kettenglied, das einteilige Kettengliedteile aufweist, ein Kettenglied folgt, dessen Kettengliedteile durch eine Innenlasche und eine Außenlasche gebildet sind, wobei zwischen der Innen- und der Außenlasche das einteilige Kettengliedteil angeordnet ist. Um sicherzustellen, daß die Innenlasche und die Außenlasche im Betrieb der Energieführungskette stets einen konstanten Abstand zueinander haben, wird vorgeschlagen, daß zwischen der Innenlasche und der Außenlasche Abstandshalter vorgesehen sind. Die Abstandshalter können an der Innen- und/oder Außenlasche ausgebildet sein.

Zur Verbindung der benachbarten Kettenglieder einer Energieführungskette wird vorgeschlagen, daß zwei Verbindungsteile vorgesehen sind. Jedes Verbindungsteil weist wenigstens ein Positionelement auf, das in die Ausnehmung der Innenlasche oder der Außenlasche hineinragt, und wenigstens ein Anschlagelement auf, das teilweise in die Ausnehmung des einteiligen Kettengliedteils hineinragt. Vorzugsweise sind die Verbindungsteile miteinander verrastbar. Zur rastenden Verbindung der Verbindungsteile wird vorgeschlagen, daß die Anschlagelemente des einen Verbindungsteils Aufnahmen aufweisen und die Anschlagelemente des anderen Verbindungsteils Rastelemente aufweisen, die in die Aufnahmen eingreifen.

Weitere Vorteile und Einzelheiten der Erfindung werden anhand eines bevorzugten in der Zeichnung dargestellten Ausführungsbeispiels erläutert. Es zeigen:
- Fig. 1: einen metallischen Kern eines Kettengliedteils,
- Fig. 2: ein Kettengliedteil mit einem Kern nach Fig. 1,
- Fig. 3: das Kettengliedteil in einer Draufsicht und im Schnitt entlang einer Mittellinie A,
- Fig. 4: das Kettengliedteil nach Fig. 1 in einer Draufsicht und im Schnitt entlang der Schnittlinie B-B,
- Fig. 5: das Kettengliedteil nach Fig. 1 in einer Seitenansicht von links und im Vollschnitt.
- Fig. 6: einen Kern eines zweiteiligen Kettengliedteils,
- Fig. 7: eine Innenlasche bzw. Außenlasche eines zweiteiligen Kettengliedteils mit einem Kern nach Fig. 6.
- Fig. 8: die Innen- bzw. Außenlasche nach Fig. 7 in einer Draufsicht und im Schnitt entlang der Mittelinie C,
- Fig. 9: die Innen bzw. Außenlasche nach Fig. 7 in einer Draufsicht und im Schnitt entlang der Schnittlinie D-D,
- Fig. 10: eine Seitenansicht der Innen- bzw. Außenlasche in einer Seitenansicht von links entlang der Schnittlinie E-E,
- Fig. 11: ein erstes Verbindungsteil in einer Vorderansicht,
- Fig. 12: das Verbindungsteil in einer Draufsicht und im Schnitt,
- Fig. 13: das Verbindungsteil in einer Seitenansicht von links und im Schnitt entlang der Linie F-F,
- Fig. 14: ein zweites Verbindungsteil in einer Vorderansicht,
- Fig. 15: das zweite Verbindungsteil in einer Draufsicht und im Vollschnitt,
- Fig. 16: das Verbindungsteil nach Fig. 14 in einer Seitenansicht und im Vollschnitt,
- Fig. 17: schematisch eine Verbindung der Verbindungsteile miteinander und im Schnitt,
- Fig. 18: eine Anordnung benachbarter Kettengliedteile mit Verbindungsteilen,
- Fig. 19: eine Schnittansicht entlang der Schnittlinie G-G nach Fig. 18,
- Fig. 20: die Anordnung nach Fig. 19 im gelösten Zustand,
- Fig. 21: einen Ausschnitt einer Energieführungskette,
- Fig. 22: ein Kettenglied mit einer Traverse im Schnitt,
- Fig. 23: das Kettenglied nach Fig. 22 in einer Draufsicht und im Teilschnitt und
- Fig. 24: ein Kettenglied mit einem Gleitschuh.

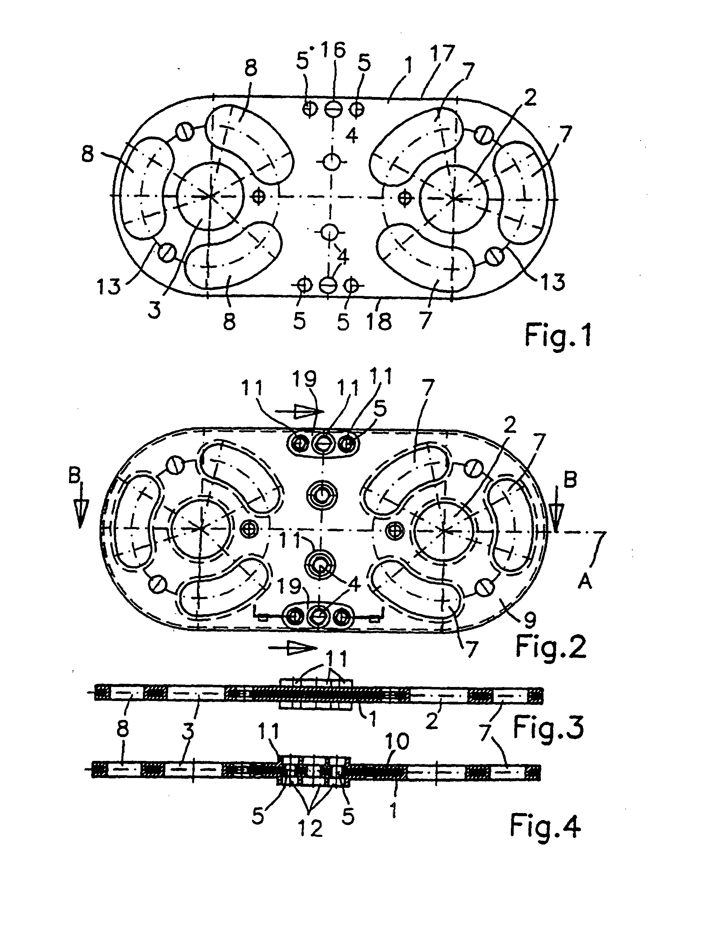

Fig. 1 zeigt einen Kern 1 für ein Kettengliedteil. Der Kern 1 besteht aus einem metallischen Werkstoff. Der Kern 1 ist im wesentlichen plattenförmig ausgebildet. Der Kern 1 weist zwei zueinander beabstandete Gelenkbohrungen 2, 3 auf. Die Gelenkbohrung 2 ist umgeben von drei bogenförmigen Ausnehmungen 7, die symmetrisch auf einem gedachten Kreisumfang 13 ausgebildet sind. Der gedachte Kreisumfang 13 ist koaxial zu der Gelenkbohrung 2. Die Gelenkbohrung 3 ist umgeben von drei Ausnehmungen 8, die bogenförmig ausgebildet sind. Die Ausnehmungen 8 liegen symmetrisch auf einem gedachten Kreisumfang 13, der koaxial zu der Gelenkbohrung 3 ist. Der Kern 1 ist spiegelsymmetrisch bezüglich der kurzen Mittelachse 16 ausgebildet. Die Längsränder 17, 18 des Kerns 1 verlaufen im wesentlichen senkrecht zu der kurzen Mittelachse 16. Auf der Mittelachse 16 sind im Abstand zueinander Bohrungen 4 ausgebildet. Im Bereich der Längsränder 17, 18 sind zusätzliche, im wesentlichen auf einer parallel zum Längsrand 17 bzw. 18 verlaufenden Linie liegenden, Bohrungen 5 ausgebildet. Zwischen zwei Bohrungen 5 liegt eine Bohrung 4.

In der Fig. 2 ist ein Kettengliedteil 9 mit einem Kern 1 dargestellt. Die Figuren 3, 4 und 5 zeigen Schnittansichten des Kettengliedteils 9. Wie insbesondere aus den Figuren 3, 4 und 5 ersichtlich ist, ist der Kern 1 des Kettengliedteils 9 vollständig von einem Kernmantel 10 umgeben. Der Kernmantel 10 besteht aus einem Kunststoff. Die Gelenkbohrungen 2, 3 sowie die Ausnehmungen 7, 8 des Kettengliedteils 9 sind frei.

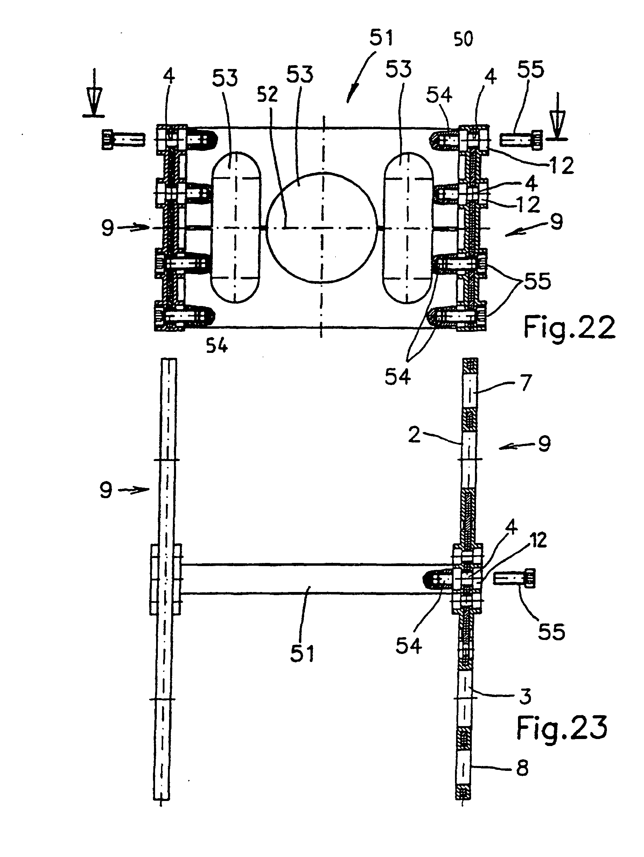

Jede Bohrung 4, 5 ist von einem umlaufenden Kragen 11 umgeben. Jeder Kragen 11 begrenzt einen Kopfraum 12, in dem ein Schraubenkopf versenkbar ist, wie dies insbesondere aus der Fig. 22 bzw. 23 ersichtlich ist. Der Kragen 11 der nebeneinander liegenden Bohrungen 5, 4, 5 ist durch einen gemeinsamen Fortsatz 19 gebildet.

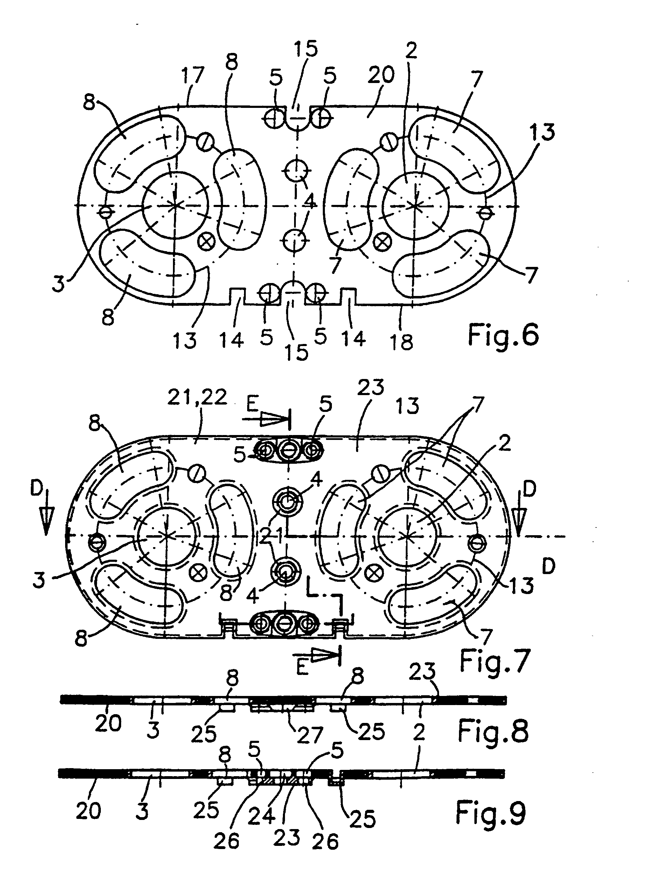

In der Fig. 6 ist ein Kern 20 für eine Innen- bzw. Außenlasche eines Kettengliedteils dargestellt. Der prinzipielle Aufbau des Kerns 20 entspricht dem Aufbau des Kerns 1, wie er in der Fig. 1 dargestellt ist. Der Kern 20 weist zwei im Abstand zueinander ausgebildete Gelenkbohrungen 2, 3 auf. Die Gelenkbohrung 2 ist umgeben von Ausnehmungen 7. Die drei Ausnehmungen 7 sind symmetrisch auf einem gedachten Kreisumfang 13 ausgebildet. Der Mittelpunkt des gedachten Kreisumfangs 13 stimmt mit dem Mittelpunkt der Gelenkbohrung 2 überein.

Die Gelenkbohrung 3 ist umgeben von drei Ausnehmungen 8. Die Ausnehmungen 8 liegen auf einem gedachten Kreisumfang 13 und sind symmetrisch auf diesem verteilt. Der gedachte Kreisumfang 13 hat mit der Gelenkbohrung 3 einen gemeinsamen Mittelpunkt.

Auf der kurzen Mittelachse 16 sind zwei Bohrungen 4 ausgebildet. Von dem Längsrand 18 erstrecken sich in Richtung des gegenüberliegenden Längsrandes 17 Aussparungen 14, die beidseits und symmetrisch zu der kurzen Mittelachse 16 liegen.

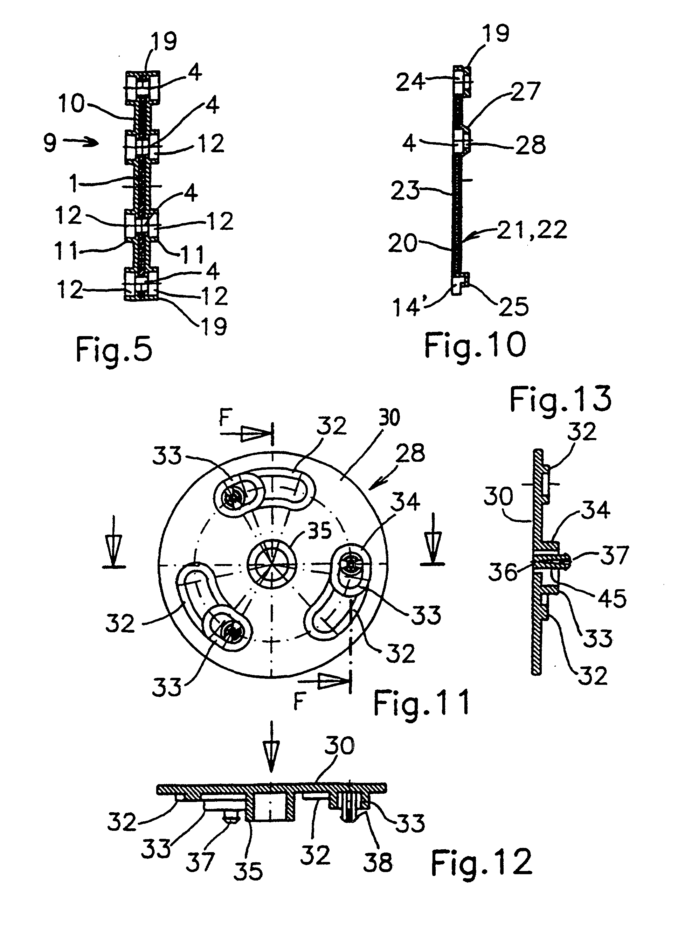

Die Fig. 7 zeigt eine Innen- bzw. Außenlasche 21, 22 zur Ausbildung eines Kettengliedteils. Die Figuren 8, 9 und 10 zeigen Schnittansichten der Innen- bzw. Außenlasche 21, 22. Die Innen- bzw. Außenlasche 21, 22 weist einen Kern 20 auf, der dem Kern, wie er in der Fig. 6 dargestellt ist, entspricht. Der Kern 20 ist . vollständig von einem Kernmantel 23 umgeben. Die Innen- bzw. Außenlasche 21, 22 weist im Bereich der ursprünglichen Aussparungen 14 des Kerns 20 eine Aussparung 14', die einen aus der Ebene vorspringenden Halter 25 aufweist. Der Halter 25 ist im Querschnitt hakenförmig. Die Bohrungen 5 sind umgeben von jeweils einem Distanzstück 23, das koaxial zu den Bohrungen 5 verlaufende Löcher 26 aufweist. Im Bereich der Öffnung 15 des Kerns 20 ist eine Durchgangsöffnung 24 angeformt. Im Bereich der Bohrungen 4 sind Distanzstücke 27 ausgebildet, die jeweils eine mit der Bohrung 4 kommunizierende Öffnung 28 aufweisen. Fig. 10 zeigt, daß die Stirnfläche des Fortsatzes 19, des Distanzstücks 27 und des Halters 25 in einer gemeinsamen Ebene liegen, die parallel zum plattenförmigen Kern 20 verläuft. Die Gesamtdicke der Innen- bzw. Außenlasche 21, 22 entspricht der halben Dicke des Kettengliedteils 29, wie dies insbesondere aus der Fig. 5 ersichtlich ist. Figuren 5 und 10 zeigen, daß der Kern 1 des Kettengliedteils 9 dicker ist als der Kern 20 der Innen- bzw. Außenlasche 21, 22.

In den Figuren 11 bis 13 ist ein erstes Verbindungsteil 28 dargestellt. Das Verbindungsteil 28 weist einen scheibenförmigen Träger 30 auf. Der Durchmesser des scheibenförmigen Trägers 30 entspricht im wesentlichen der Breite des Kettengliedteils. Auf dem Träger 30 sind auf einem Kreisumfang symmetrisch Positionierelemente 32 ausgebildet. Die Positionierelemente 32 haben eine bogenförmige Form. Die Außenkontur der Positionierelemente 32 entspricht im wesentlichen der Innenkontur der Ausnehmungen 7, 8. Der Träger 30 weist ferner Anschlagelemente 33 auf, die sich über einen Teil der Länge in Umfangsrichtung betrachtet der Positionierelemente 32 erstrekken. Wie insbesondere aus der Fig. 11 und der Fig. 13 ersichtlich ist, haben die Anschlagelemente 33 und die Positionierelemente 32 teilweise eine gemeinsame Wandung 34. Die Anschlagelemente 33 weisen eine größere Höhe auf als die Positionierelemente 32. Die Höhe der Positionierelemente 32 entspricht in dem dargestellten Ausführungsbeispiel der Dicke der Innen- bzw. Außenlasche 21, 22.

Im Zentrum des Trägers 30 ist ein im wesentlichen zylinderförmiger Vorsprung 35 ausgebildet, der ein Teil einer Gelenkverbindung, auf die noch nachstehend eingegangen wird, bildet. Die Anschlagelemente 33 weisen stiftförmige Rastelemente 36 auf. Die Rastelemente 36 weisen an ihrem freien Ende einen sich konisch verjüngenden Abschnitt 37 mit einer Schulter 38 auf. Die stiftförmigen Rastelemente 36 sind in ihrer Längsrichtung betrachtet geteilt und im Abstand zueinander ausgebildet, so daß die Rastelemente zusammendrückbar sind und nach Freigabe in ihre Ursprungs form zurückspringen. Hierzu bestehen die Rastelemente 36 aus einem federelastischen Werkstoff. Das Verbindungsteil 28 ist aus einem Kunststoff hergestellt.

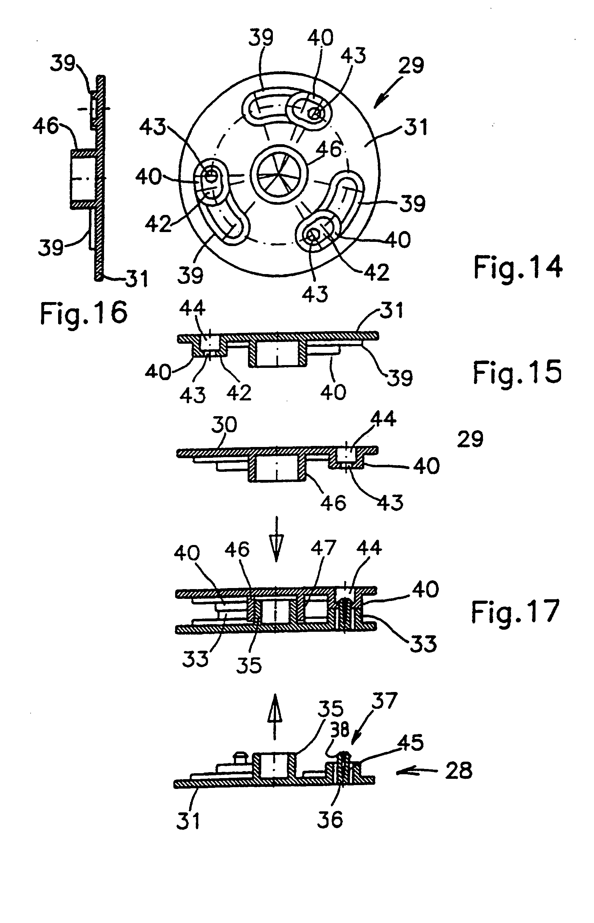

Figuren 14 bis 15 zeigen ein zweites, zu dem Verbindungsteil 28 komplementäres Verbindungsteil 29. Der prinzipielle Aufbau des Verbindungsteils 29 entspricht dem Aufbau des Verbindungsteils 28. Das Verbindungsteil 29 weist einen Träger 31 auf, der scheibenförmig ausgebildet ist. Auf einem Kreisumfang sind symmetrisch zueinander Positionierelemente 39 vorgesehen. Die Positionierelemente sind bogenförmig ausgebildet. Sie weisen eine Außenkontur auf, die im wesentlichen der Innenkontur der Ausnehmungen 7, 8 entspricht. Das Verbindungsteil 29 weist ferner Anschlagelemente 40 auf, die im wesentlichen eine den Anschlagelementen 39 entsprechende Kontur aufweisen, wobei sich die Anschlagelemente nur teilweise in Längsrichtung der Positionierelemente 39 erstrecken. Die Anschlagelemente 40 sind hohlkörperförmig ausgebildet. Sie weisen eine Deckfläche 42 auf, in der jeweils eine Durchgangsbohrung 43 ausgebildet ist. Das hohlkörperförmig ausgebildete Anschlagelement 40 weist eine Aufnahme 44 auf. Der Querschnitt der Durchgangsbohrung 43 entspricht im wesentlichen dem Querschnitt eines Schaftes 45 des stiftförmigen Rastelementes 36. Im Zentrum des Trägers 31 ist ein im wesentlichen rohrförmiger Vorsprung 46 ausgebildet, dessen Innenquerschnitt im wesentlichen dem Außenquerschnitt des Vorsprungs 35 des Verbindungsteils 28 entspricht.

Fig. 17 zeigt die Verbindungsteile 28, 29 im unverbundenen und im verbundenen Zustand. Der Übersichtlichkeit wegen ist auf die Darstellung von Kettengliedteilen verzichtet worden. Die Verbindungsteile 28, 29 werden so aufeinander zubewegt, daß der Vorsprung 35 des Verbindungsteils 28 in den Vorsprung 46 des Verbindungsteils 29 hineinragt. Die Vorsprünge 35, 46 bilden einen Gelenkbolzen 47. Im montierten Zustand liegen die Anschlagelemente 33, 40 aneinander. Die einzelnen Rastelemente 36 ragen in die einzelnen Aufnahmen 44 des Verbindungsteils 49 hinein. Die Schulter 38 eines jeden Rastelements 36 kommt hierbei zur Anlage an eine Innenfläche der Aufnahme 44. Beim Durchtritt der einzelnen Rastelemente 36 durch die Durchgangsbohrungen 43 eines Anschlagelements 40 werden die Rastelemente zusammengedrückt. Hat der Abschnitt 37 des Rastelements 36 die Aufnahme 44 erreicht, so federt das Rastelement 36 auf, wodurch die Schulter 38 zur Anlage an die Wandung der Aufnahme 44 gelangt. Die Verbindungsteile 28, 29 sind lösbar miteinander verbunden.

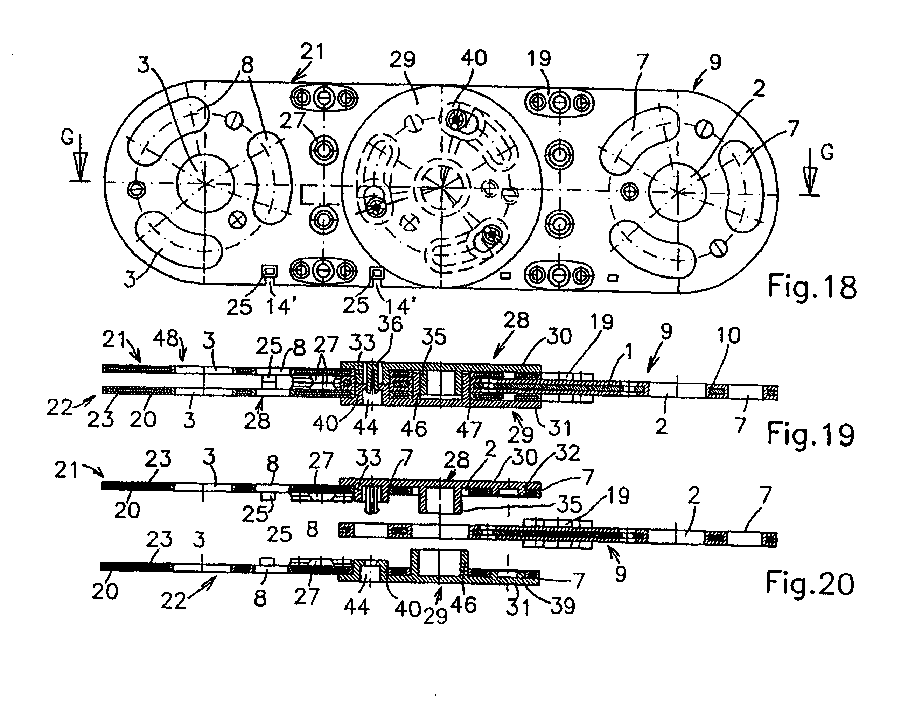

Ein Zusammenwirken der Verbindungsteile 28, 29 mit Kettengliedteilen ist in der Fig. 18, 19 und 20 dargestellt. Fig. 20 zeigt im oberen Teil der Darstellung das Zusammenwirken des Verbindungsteils 28 mit der Innenlasche 21. Die Positionierelemente 32 des Verbindungsteils 28 ragen in die Ausnehmungen 7 der Innenlasche 22 hinein. Aus der Fig. 20 ist ersichtlich, daß die Höhe der Positionierelemente im wesentlichen der Dicke der Innenlasche 21 entspricht. Der Vorsprung 35 des Verbindungsteils 28 erstreckt sich durch die Gelenkbohrung 2 hindurch. Die Anschlagelemente 33 erstrecken sich durch die Ausnehmungen 7 hindurch und stehen vor.

Der untere Teil der Darstellung in der Fig. 20 zeigt eine Außenlasche 22 mit dem Verbindungsteil 29. Die Positionierelemente 39 des Verbindungsteils 29 ragen in die Ausnehmung 7 der Außenlasche 22 hinein. Der Vorsprung 46 ragt durch die Gelenkbohrung 2 der Außenlasche 22 hindurch. Die Anschlagelemente 40 erstrecken sich durch die Außenlasche 22 hindurch.

Fig. 19 zeigt die Verbindung der Innen- und Außenlasche 21, 22 mit dem Kettengliedteil 9. Die Innenlasche 21 und die Außenlasche 22 bildet hierbei ein Kettengliedteil 48. Wie aus der Fig. 19 ersichtlich ist ragen die Anschlagelemente 33, 40 teilweise in die Ausnehmung 8 des Kettengliedteils 9 hinein. Die Verbindungsteile 28, 29 sind über die Rastelemente 36 und die Aufnahmen 44 miteinander verbunden. Die Vorsprünge 35, 46 bilden einen Gelenkbolzen 47. Die Höhe der Anschlagelemente 33, 40 ist so bemessen, daß im montierten Zustand die Innenlasche 21 und die Außenlasche 22 an das Kettengliedteil 29 anliegt. Fig. 19 zeigt auch, daß die Distanzstücke 27 der Innenlasche 21 und der Außenlasche 22 aneinander liegen. Das Kettengliedteil 48 und das Kettengliedteil 9 sind relativ zueinander um den Gelenkbolzen 47 verschwenkbar. Die Verbindungsteile 28, 29 sind ortsfest mit der Innenlasche 21 bzw. Außenlasche 22 verbunden.

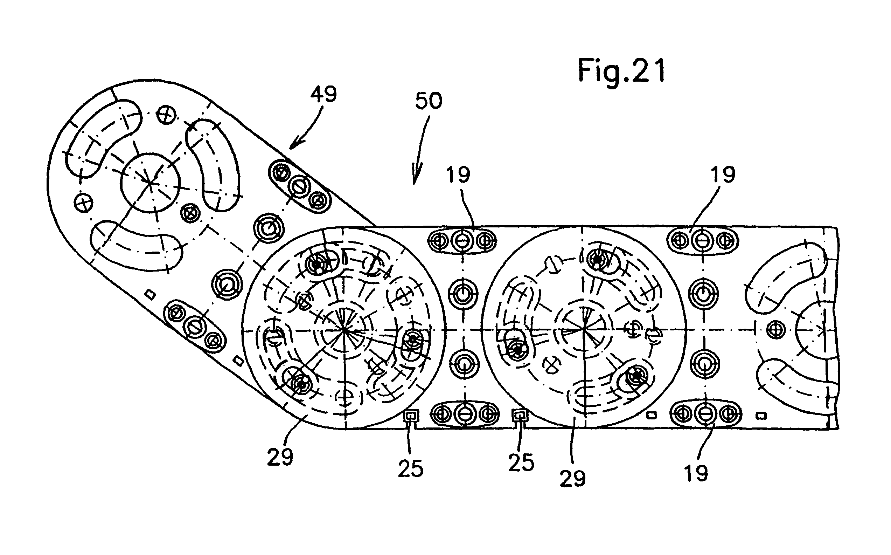

In der Fig. 21 ist ein Abschnitt einer Energieführungskette in einer Vorderansicht dargestellt. Die einzelnen Kettengliedteile der Energieführungskette sind durch die Verbindungsteile miteinander verbunden. Fig. 21 zeigt, daß ein Kettenglied 49 gegenüber seinem benachbarten Kettenglied 50 verschwenkt ist. Der Verschwenkwinkel zwischen zwei benachbarten Kettengliedern 49, 50 wird durch eine Differenz zwischen der Länge der Ausnehmung 8 in Umfangsrichtung und dem Anschlagelement 40 in Umfangsrichtung bestimmt.

Figuren 22, 23 zeigen ein Kettenglied 50 einer Energieführungskette. Das Kettenglied 50 umfaßt zwei im Abstand zueinander angeordnete Kettengliedteile 9. Die Kettengliedteile 9 sind durch eine Traverse 51 miteinander verbunden. Die Traverse 51 ist in Form eines Lochstegs ausgebildet. Sie ist zweiteilig, wobei die Teilungsebene 52 im wesentlichen senkrecht zu einer Längsebene der Kettengliedteile 9 verläuft. Die Traverse 51 weist Aufnahmeöffnungen 53 auf, die zur Aufnahme von nicht dargestellten Leitungen dienen. Zur Verbindung der Traverse 51 mit den Kettengliedteilen 9 weist die Traverse Gewindebohrungen 54 auf, in die Schrauben 55 einschraubbar sind. Die Schrauben 55 erstrecken sich durch die Bohrungen 4, die jeweils in dem Kettengliedteil 9 ausgebildet sind. Der Kopf einer jeden Schraube ist im montierten Zustand im Kopfraum 12 versenkt.

Die in der Fig. 22 und 23 dargestellte Ausführungsform einer Traverse stellt ein Beispiel einer Traverse dar. Eine Traverse 51 kann auch in Form eines Deckels ausgebildet sein. Die Verbindung einer solchen Traverse erfolgt über eine Schraubverbindung, wobei die Schrauben sich dann durch die Bohrungen 5 des Kettengliedteils erstrecken.

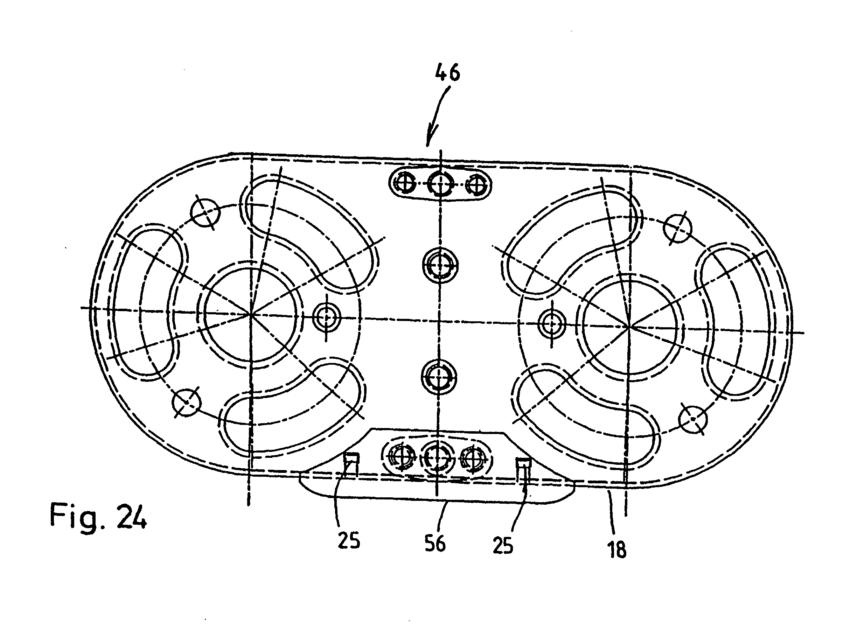

Während des Betriebes einer Energieführungskette gleitet ein Längsrand der Kettengliedteile auf einer Auflage. Aufgrund von Reibung zwischen dem Längsrand und der Auflage kommt es zum Verschleiß der Kettenglieder. Desweiteren sind aufgrund der während der Bewegung der Energieführungskette entstehenden Kräfte Reibungsverluste zu verzeichnen. Zur Verringerung der Reibungsverluste sowie des Verschleißes wird vorgeschlagen, daß an einem Längsrand 18 ein Gleitschuh 56 angeordnet ist, wie die in der Fig. 24 dargestellt ist. Zur Verbindung des Gleitschuhs 56 mit einem Kettengliedteil 48 dienen die Halter 25 sowie die Aussparungen 14' wie aus den Figuren 18 und 19 ersichtlich ist. Der Gleitschuh 56 weist entsprechende Ausformungen auf, so daß eine rastende Verbindung zwischen dem Kettengliedteil 48 und dem Gleitschuh 56 hergestellt wird.

### Bezugszeichenliste

- 1: Kern
- 2, 3: Gelenkbohrung
- 4, 5: Bohrung
- 7, 8: Ausnehmung
- 9: Kettengliedteil
- 10: Kernmantel
- 11: Kragen
- 12: Kopfraum
- 13: Kreisumfang
- 14: Aussparung
- 15: Öffnung
- 16: Mittelachse
- 17, 18: Längsrand
- 19: Fortsatz
- 20: Kern
- 21: Innenlasche
- 22: Außenlasche
- 24: Durchgangsöffnung
- 25: Halter
- 26: Loch
- 27: Distanzstück
- 28, 29: Verbindungsteil
- 30, 31: Träger
- 32: Positionierelement
- 33: Anschlagelement
- 34: Wand
- 35: Vorsprung
- 36: Rastelement
- 37: Abschnitt
- 38: Schulter
- 39: Positionierelement
- 40: Anschlagelement
- 41: Wand
- 42: Deckfläche
- 43: Durchgangsbohrung
- 44: Aufnahme
- 45: Schaft
- 46: Vorsprung
- 47: Gelenkbolzen
- 48: Kettengliedteil
- 49, 50: Kettenglied
- 51: Traverse
- 52: Teilungsebene
- 53: Leitungsaufnahme
- 54: Gewindebohrung
- 55: Schraube
- 56: Gleitschuh

## Patentansprüche

1. Kettenglied (49, 50) für Energieführungsketten zum Führen von Versorgungsleitungen, das zwei voneinander beabstandete einander gegenüberliegende Kettengliedteile (9, 48) und wenigstens eine mit den Kettengliedteilen (9, 48) verbundene Traverse (51) aufweist,
**dadurch gekennzeichnet, daß**
mindestens ein Kettengliedteil (9, 48) wenigstens eines Kettengliedes (49, 50) einen Kern (1, 20) und einen wenigstens teilweise den Kern (1, 20) umgebenden Kernmantel (10, 23) hat, wobei der Kern (1, 20) so ausgebildet ist, daß dieser gegenüber dem Kernmantel (10, 23) eine höhere Festigkeit aufweist.

2. Kettenglied nach Anspruch 1, **dadurch gekennzeichnet, daß** der Kern (1, 20) durch wenigstens eine makroskopische Struktur gebildet ist, die eine hohe mechanische Festigkeit aufweist.

3. Kettenglied nach Anspruch 2, **dadurch gekennzeichnet, daß** der Kern (1, 20) eine wabenförmige Struktur aufweist.

4. Kettenglied nach Anspruch 1, 2 oder 3 **dadurch gekennzeichnet, daß** der Kern (1, 20) aus wenigstens einem ersten Werkstoff besteht, der gegenüber wenigstens einem zweiten Werkstoff des Kernmantels (10, 23) eine höhere Festigkeit, insbesondere ein größeres Elastizitätsmodul, aufweist.

5. Kettenglied nach Anspruch 4, **dadurch gekennzeichnet, daß** der Kern (1, 20) aus wenigstens einem ersten Werkstoff besteht, der gegenüber wenigstens einem zweiten Werkstoff des Kernmantels (10, 23) ein mindestens fünfmal, vorzugsweise zehnmal, so großes Elastizitätsmodul aufweist.

6. Kettenglied nach einem der Ansprüche 1 bis 5, **dadurch gekennzeichnet, daß** der Kern (1, 20) einen mehrschichtigen Aufbau aufweist.

7. Kettenglied nach Anspruch 6, **dadurch gekennzeichnet, daß** der Aufbau durch wenigstens zwei Lagen aus unterschiedlichen Werkstoffen gebildet ist.

8. Kettenglied nach Anspruch 4 oder 5, **dadurch gekennzeichnet, daß** der Kern (1, 20) mindestens teilweise aus wenigstens einem metallischen Werkstoff besteht.

9. Kettenglied nach Anspruch 8, **dadurch gekennzeichnet, daß** der Kern (1, 20) wenigstens teilweise aus einem Leichtmetall besteht.

10. Kettenglied nach Anspruch 9, **dadurch gekennzeichnet, daß** der Kern (1, 20) aus Aluminium oder einer Aluminiumlegierung besteht.

11. Kettenglied nach Anspruch 8, **dadurch gekennzeichnet, daß** der Kern (1, 20) wenigstens teilweise aus Stahl oder aus einer Stahllegierung besteht.

12. Kettenglied nach einem der Ansprüche 1 bis 11, **dadurch gekennzeichnet, daß** der Kern (1, 20) einteilig ausgebildet ist.

13. Kettenglied nach einem der Ansprüche 1 bis 12, **dadurch gekennzeichnet, daß** der Kern (1, 20) plattenförmig ausgebildet ist.

14. Kettenglied nach einem der Ansprüche 1 bis 13, **dadurch gekennzeichnet, daß** der Kernmantel (10, 23) den Kern (1, 20) vollständig umgibt.

15. Kettenglied nach einem der Ansprüche 1 bis 14, **dadurch gekennzeichnet, daß** der Kernmantel (10, 23) mindestens teilweise aus wenigstens einem Kunststoff besteht.

16. Kettenglied nach einem der Ansprüche 1 bis 14, **dadurch gekennzeichnet, daß** die Gestalt des Kerns (1, 20) im wesentlichen einer Form eines Kettengliedteils (9, 48) entspricht.

17. Verfahren zum Herstellen eines Kettengliedteils (9, 48) eines Kettengliedes (49, 50) für Energieführungsketten zum Führen von Versorgungsleitungen,
**dadurch gekennzeichnet, dass**
ein Kern (1, 20) eines Kettengliedteils (9, 48) ausgebildet und der Kern (1, 20) mit einem den Kern (1, 20) wenigstens teilweise umgebenden Kernmantel (10, 23) versehen wird, wobei der Kern (1, 20) so ausgebildet wird, daß dieser gegenüber dem Kernmantel (10, 23) eine höhere Festigkeit aufweist.

18. Verfahren nach Anspruch 17, bei dem der Kern (1, 20) aus wenigstens einem ersten Werkstoff gebildet wird, der gegenüber wenigstens einem zweiten Werkstoff des Kernmantels (10, 23) eine höhere Festigkeit, insbesondere ein größeres Elastizitätsmodul, aufweist.

19. Verfahren nach Anspruch 18, bei dem der Kern (1, 20) aus wenigstens einem ersten Werkstoff gebildet wird, der gegenüber wenigstens einem zweiten Werkstoff des Kernmantels (10, 23) ein mindestens fünfmal, vorzugsweise zehnmal, so großes Elastizitätsmodul aufweist.

20. Verfahren nach einem der Ansprüche 17, 18 oder 19, bei dem der Kern (1, 20) mehrschichtig aufgebaut wird.

21. Verfahren nach Anspruch 20 bei dem der Kern (1, 20) als ein Laminat aus wenigstens zwei Lagen aus unterschiedlichen Werkstoffen gebildet wird.

22. Verfahren nach einem der Ansprüche 17, 18 oder 19, bei dem der Kern (1, 20) mindestens teilweise aus wenigstens einem metallischen Werkstoff ausgebildet wird.

23. Verfahren nach Anspruch 22, bei dem der Kern (1, 20) wenigstens teilweise aus einem Leichtmetall ausgebildet wird.

24. Verfahren nach Anspruch 23, bei dem der Kern (1, 20) aus Aluminium oder einer Aluminiumlegierung ausgebildet wird.

25. Verfahren nach Anspruch 24, bei dem der Kern (1, 20) wenigstens teilweise aus Stahl oder aus einer Stahllegierung ausgebildet wird.

26. Verfahren nach einem der Ansprüche 17 bis 25, bei dem der Kern (1, 20) einteilig ausgebildet wird.

27. Verfahren nach einem der Ansprüche 17 bis 26, bei dem der Kern (1, 20) aus einem Ausgangsmaterial, vorzugsweise spanlos, herausgetrennt wird.

28. Verfahren nach einem der Ansprüche 17 bis 26, bei dem der Kern (1, 20) mit einem Kernmantel (10, 23) aus wenigstens einem Kunststoff umspritzt wird.

29. Energieführungskette mit wenigstens einem Kettenglied nach einem der Ansprüche 1 bis 16, wobei jedes Kettengliedteil (9, 48) jeweils zwei voneinander beabstandete quer zur Längserstreckung des Kettengliedteils (9, 48) verlaufende Gelenkbohrungen (2, 3), die jeweils von wenigstens einer bogenförmigen Ausnehmung (7, 8) umgeben sind, aufweist, die Kettengliedteile (9, 48) benachbarter Kettenglieder (49, 50) durch wenigstens ein Verbindungsteil (28, 29) aus einem Kunststoff miteinander verbunden sind, wobei jedes Verbindungsteil (28, 29) wenigstens ein Positionierelement (32. 30), das in die Ausnehmung (7) eines Kettengliedteils (48) hineinragt und das Verbindungsteil (28, 29) an dem Kettengliedteil (48) festlegt, und wenigstens ein Anschlagelement (33, 40), das in die Ausnehmung (8) eines Kettengliedteils (9) eines benachbarten Kettengliedes (49, 50) hineinragt und einen Verschwenkwinkel der benachbarten Kettenglieder (49, 50) um einen gemeinsamen Gelenkbolzen (47), der sich durch die Gelenkbohrungen (2, 3) erstreckt, begrenzt.

30. Energieführungskette nach Anspruch 29, **dadurch gekennzeichnet, daß** auf ein Kettenglied (49), das einteilige Kettengliedteile (9) aufweist, ein Kettenglied (50) folgt, dessen Kettengliedteile (48) durch eine Innenlasche (21) und eine Außenlasche (22) gebildet sind, wobei zwischen der Innen- und der Außenlaschen (21, 22) das einteilige Kettengliedteil (9) angeordnet ist.

31. Energieführungskette nach Anspruch 30, **dadurch gekennzeichnet, daß** zur Verbindung benachbarter Kettengliedteile (9, 48) zwei Verbindungsteile (28, 29) vorgesehen sind, wobei jedes Verbindungsteil (28, 29) wenigstens ein Positionierelement (32, 39), das in die Ausnehmung (7) der Innenlasche (21) oder der Außenlasche (22) hineinragt, und wenigstens ein Anschlagelement (33), das teilweise in die Ausnehmung (8) des einteiligen Kettengliedteils (9) hineinragt, hat.

32. Energieführungskette nach Anspruch 31, **dadurch gekennzeichnet, daß** die Verbindungsteile (28, 29) miteinander, vorzugsweise lösbar, verrastbar sind.

33. Energieführungskette nach Anspruch 32, **dadurch gekennzeichnet, daß** die Anschlagelemente (40) des einen Verbindungsteils (29) Aufnahmen (44) und die Anschlagelemente (33) des anderen Verbindungsteils (28) Rastelemente (36) aufweisen, die in die Aufnahmen (44) eingreifen.

## Claims

1. Chain link (49, 50) for energy guide chains for guiding supply lines, comprising two spaced-apart, mutually oppositely disposed chain link portions (9, 48) and at least one transverse portion (51) connected to the chain link portions (9, 48), **characterized in that** at least one chain link portion (9, 48) of at least one chain link (49, 50) has a core (1, 20) and a core envelope (10, 23), which at least partially encloses the core (1, 20), wherein the core (1, 20) is of such a configuration that it is of higher strength with respect to the core envelope (10, 23).

2. Chain link according to claim 1, **characterized in that** the core (1, 20) is formed by at least one macroscopic structure, which has a high level of mechanical strength.

3. Chain link according to claim 2, **characterized in that** the core (1, 20) has a honeycomb structure.

4. Chain link according to claim 1, 2 or 3, **characterized in that** the core (1, 20) comprises at least a first material, which has a higher level of strength, particularly a greater modulus of elasticity in comparison with at least a second material of the core envelope (10, 23).

5. Chain link according to claim 4, **characterized in that** the core (1, 20) comprises at least a first material, which has a modulus of elasticity in comparison with at least a second material of the core envelope (10, 23), which is at least five times as great, preferably ten times as great as at least a second material of the core envelope (10, 23).

6. Chain link according to one of claims 1 to 5, **characterized in that** the core (1, 20) has a multi-layer structure.

7. Chain link according to claim 6, **characterized in that** the structure is formed by at least two layers of different materials.

8. Chain link according to claim 4 or 5, **characterized in that** the core (1, 20) comprises at least partially at least one metallic material.

9. Chain link according to claim 8, **characterized in that** the core (1, 20) at least partially comprises a light metal.

10. Chain link according to claim 9, **characterized in that** the core (1, 20) comprises aluminium or an aluminium alloy.

11. Chain link according to claim 8, **characterized in that** the core (1, 20) at least partially comprises steel or a steel alloy.

12. Chain link according to one of claims 1 to 11, **characterized in that** the core (1, 20) is formed in one piece.

13. Chain link according to one of claims 1 to 12, **characterized in that** the core (1, 20) has a plate-like configuration.

14. Chain link according to one of claims 1 to 13, **characterized in that** the core envelope (10, 23) completely encloses the core (1, 20).

15. Chain link according to one of claims 1 to 14, **characterized in that** the core envelope (10, 23) at least partially comprises at least one plastic material.

16. Chain link according to one of claims 1 to 14, **characterized in that** the configuration of the core (1, 20) substantially corresponds to a shape of a chain link portion (9, 48).

17. A process for the production of a chain link portion (9, 48) of a chain link (49, 50) for energy guide chains for guiding supply lines, **characterized in that** a core (1, 20) of a chain link portion (9, 48) is produced and the core (1, 20) is provided with a core envelope (10, 23) which at least partially encloses the core (1, 20), wherein the core (1, 20) is configured such that it has a higher level of strength in comparison with the core envelope (10, 23).

18. Process according to claim 17, wherein the core (1, 20) is formed from at least a first material, which has a higher level of strength, in particular a greater modulus of elasticity, in comparison with at least a second material of the core envelope (10, 23).

19. Process according to claim 18, wherein the core (1, 20) comprises at least a first material, which has a modulus of elasticity in comparison with at least a second material of the core envelope (10, 23), which is at least five times as great, preferably ten times as great as at least a second material of the core envelope (10, 23).

20. Process according to one of claims 17, 18 or 19, wherein the core (1, 20) is formed in a multi-layer structure.

21. Process according to claim 20, wherein the core (1, 20) is formed as a laminate from at least two layers of different materials.

22. Process according to one of claims 17, 18 or 19, wherein the core (1, 20) is at least partially formed from at least one metallic material.

23. Process according to claim 22, wherein the core (1, 20) is at least partially formed from a light metal.

24. Process according to claim 23, wherein the core (1, 20) is formed from aluminium or an aluminium alloy.

25. Process according to claim 24, wherein the core (1, 20) is at least partially formed from steel or a steel alloy.

26. Process according to one of claims 17 to 25, wherein the core (1, 20) is formed in one piece.

27. Process according to one of claims 17 to 26, wherein the core (1, 20) is separated out of a starting material, without chip formation.

28. Process according to one of claims 17 to 26, wherein a core envelope (10, 23) comprising at least one plastic material is injected around the core (1, 20).

29. An energy guide chain comprising at least one chain link according to one of claims 1 to 16, wherein each chain link portion (9, 48) has two spaced-apart pivot bores (2, 3) respectively, which extend transversely with respect to the longitudinal extent of the chain link portion (9, 48) and which are surrounded by at least one arcuate recess (7, 8), the chain link portions (9, 48) of adjacent chain links (49, 50) being connected together by at least one connecting portion (28, 29) comprising a plastic material, wherein each connecting portion (28, 29) has at least one positioning element (32, 30), which projects into the recess (7) of a chain link portion (48) and fixes the connecting portion (28, 29) to the chain link portion (48) and at least one abutment element (33, 40), which projects into the recess (8) of a chain link portion (9) of an adjacent chain link (49, 50) and defines an angle of pivotal movement of the adjacent chain links (49, 50) about a common pivot pin (47), which extends through the pivot bores (2, 3).

30. Energy guide chain according to claim 29, **characterized in that** a chain link (49), which has one-piece chain link portions (9) is followed by a chain link (50), whose chain link portions (48) are formed by an inner plate (21) and an outer plate (22), wherein the one-piece chain link portion (9) being arranged between the inner and outer plates (21, 22).

31. Energy guide chain according to claim 30, **characterized in that** two connecting portions (28, 29) are provided for connecting adjacent chain link portions (9, 48), wherein each connecting portion (28, 29) has at least one positioning element (32, 39), which projects into the recess (7) of the inner plate (21) or the outer plate (22) and at least one abutment element (33), which partially projects into the recess (8) of the one-piece chain link portion (9).

32. Energy guide chain according to claim 31, **characterized in that** the connecting portions (28, 29) are preferably releasably latchable to each other.

33. Energy guide chain according to claim 32, **characterized in that** the abutment elements (40) of the one connecting portion (29) have receiving means (44) and the abutment elements (33) of the other connecting portion (28) have retaining elements (36), which engage into the receiving means (44).

## Revendications

1. Maillon de chaîne (49, 50) pour des chaînes de conduite d'énergie destinées au guidage de conduites d'alimentation, qui présente deux pièces de maillon de chaîne (9, 48) à distance l'une de l'autre et en vis à vis l'une de l'autre, et au moins une entretoise (51) reliée aux pièces de maillon de chaîne (9, 48), **caractérisé en ce qu'**au moins une pièce de maillon de chaîne (9, 48) d'au moins un maillon de chaîne (49, 50) a une âme (1, 20) et une enveloppe d'âme (10, 23) entourant au moins partiellement l'âme (1, 20), l'âme (1, 20) étant réalisée de telle manière que celle-ci présente une résistance plus élevée par rapport à l'enveloppe d'âme (10, 23).

2. Maillon de chaîne selon la revendication 1, **caractérisé en ce que** l'âme (1, 20) est formée par au moins une structure macroscopique qui a une résistance mécanique élevée.

3. Maillon de chaîne selon la revendication 2, **caractérisé en ce que** l'âme (1, 20) a une structure en forme de nids d'abeilles.

4. Maillon de chaîne selon la revendication 1, 2 ou 3, **caractérisé en ce que** l'âme (1, 20) est constituée d'au moins un premier matériau, qui par rapport à au moins un deuxième matériau de l'enveloppe d'âme (10, 23) a une résistance plus élevée, notamment un module d'élasticité plus grand.

5. Maillon de chaîne selon la revendication 4, **caractérisé en ce que** l'âme (1, 20) est constituée d'au moins un premier matériau qui par rapport à au moins un deuxième matériau de l'enveloppe d'âme (10, 23) a un module d'élasticité qui est au moins cinq fois, de préférence dix fois plus grand.

6. Maillon de chaîne selon l'une des revendications 1 à 5, **caractérisé en ce que** l'âme (1, 20) a une structure à couches multiples.

7. Maillon de chaîne selon la revendication 6, **caractérisé en ce que** la structure est formée par au moins deux couches de matériaux différents.

8. Maillon de chaîne selon la revendication 4 ou 5, **caractérisé en ce que** l'âme (1, 20) est constituée au moins partiellement d'au moins un matériau métallique.

9. Maillon de chaîne selon la revendication 8, **caractérisé en ce que** l'âme (1, 20) est constituée au moins partiellement d'un métal léger.

10. Maillon de chaîne selon la revendication 9, **caractérisé en ce que** l'âme (1, 20) est constituée d'aluminium ou d'un alliage d'aluminium.

11. Maillon de chaîne selon la revendication 8, **caractérisé en ce que** l'âme (1, 20) est constituée au moins partiellement d'acier ou d'un alliage d'acier.

12. Maillon de chaîne selon l'une des revendications 1 à 11, **caractérisé en ce que** l'âme (1, 20) est réalisée en une pièce.

13. Maillon de chaîne selon l'une des revendications 1 à 12, **caractérisé en ce que** l'âme (1, 20) est réalisée en forme de plaque.

14. Maillon de chaîne selon l'une des revendications 1 à 13, **caractérisé en ce que** l'enveloppe d'âme (10, 23) entoure complètement l'âme (1, 20).

15. Maillon de chaîne selon l'une des revendications 1 à 14, **caractérisé en ce que** l'enveloppe d'âme (10, 23) est constituée au moins partiellement d'au moins une matière plastique.

16. Maillon de chaîne selon l'une des revendications 1 à 14, **caractérisé en ce que** la configuration de l'âme (1, 20) correspond sensiblement à une forme d'une pièce de maillon de chaîne (9, 48).

17. Procédé de fabrication d'une pièce de maillon de chaîne (9, 48) d'un maillon de chaîne (49, 50) pour des chaînes de conduite d'énergie destinées au guidage de conduites d'alimentation, **caractérisé en ce qu'**une âme (1, 20) d'une pièce de maillon de chaîne (9, 48) est réalisée et l'âme (1, 20) est dotée d'une enveloppe d'âme (10, 23) entourant au moins partiellement l'âme (1, 20), l'âme (1, 20) étant réalisée de telle manière que celle-ci a par rapport à l'enveloppe d'âme (10, 23) une résistance plus élevée.

18. Procédé selon la revendication 17, dans le cas duquel l'âme est constituée d'au moins un premier matériau, qui par rapport à au moins un deuxième matériau de l'enveloppe d'âme (10, 23) a une résistance plus élevée, notamment un module d'élasticité plus grand.

19. Procédé selon la revendication 18, dans le cas duquel l'âme (1, 20) est constituée d'au moins un premier matériau qui par rapport à au moins un deuxième matériau de l'enveloppe d'âme (10, 23) a un module d'élasticité qui est au moins cinq fois, de préférence dix fois plus grand.

20. Procédé selon l'une des revendications 17, 18 ou 19, dans le cas duquel l'âme (1, 20) a une structure à couches multiples.

21. Procédé selon la revendication 20, dans le cas duquel l'âme (1, 20) est formée en tant que laminé d'au moins deux couches de matériaux différents.

22. Procédé selon l'une des revendications 17, 18 ou 19, dans le cas duquel l'âme (1, 20) est réalisée au moins partiellement d'au moins un matériau métallique.

23. Procédé selon la revendication 22, dans le cas duquel l'âme (1, 20) est réalisée au moins partiellement d'un métal léger.

24. Procédé selon la revendication 23, dans le cas duquel l'âme (1, 20) est réalisée d'aluminium ou d'un alliage d'aluminium.

25. Procédé selon la revendication 24, dans le cas duquel l'âme (1, 20) est réalisée au moins partiellement d'acier ou d'un alliage d'acier.

26. Procédé selon l'une des revendications 17 à 25, dans le cas duquel l'âme (1, 20) est réalisée en une pièce.

27. Procédé selon l'une des revendications 17 à 26, dans le cas duquel l'âme (1, 20) est séparée hors d'un matériau de départ, de préférence sans enlèvement de copeaux.

28. Procédé selon l'une des revendications 17 à 26, dans le cas duquel une enveloppe d'âme (10, 23) d'au moins une matière plastique est injectée autour de l'âme (1, 20).

29. Chaîne de conduite d'énergie comportant au moins un maillon de chaîne selon l'une des revendications 1 à 16, où chaque pièce de maillon de chaîne (9, 48) a respectivement deux alésages d'articulation (2, 3) à distance l'un de l'autre, s'étendant transversalement par rapport à l'étendue longitudinale de la pièce de maillon de chaîne (9, 48) qui sont entourés respectivement par au moins un dégagement en forme d'arc (7, 8), les pièces de maillon de chaîne (9, 48) de maillons de chaîne adjacents (49, 50) sont reliées par au moins une pièce de liaison (28, 29) d'une matière plastique, dans quel cas chaque pièce de liaison (28, 29) limite au moins un élément de positionnement (32, 30), qui pénètre dans le dégagement (7) d'une pièce de maillon de chaîne (48) et qui fixe la pièce de liaison (28, 29) à la pièce de maillon de chaîne (48), et au moins un élément de butée (33, 40) qui pénètre dans le dégagement (8) d'une pièce de maillon de chaîne (9) d'un maillon de chaîne adjacent (49, 50) et un angle de pivotement des maillons de chaîne adjacents (49, 50) autour d'un axe d'articulation (47) qui s'étend à travers les alésages d'articulation (2, 3).

30. Chaîne de conduite d'énergie selon la revendication 29, **caractérisée en ce qu'**un maillon de chaîne (49), qui présente des pièces de maillon de chaîne (9) d'une pièce, est suivi d'un maillon de chaîne (50), dont les pièces de maillon de chaîne (48) sont formées par une éclisse intérieure (21) et une éclisse extérieure (22), la pièce de maillon de chaîne (9) en une pièce étant agencée entre l'éclisse intérieure et extérieure (21, 22).

31. Chaîne de conduite d'énergie selon la revendication 30, **caractérisée en ce que** deux pièces de liaison (28, 29) sont prévues pour la liaison de pièces de maillon de chaîne adjacents (9, 48), dans quel cas chaque pièce de liaison (28, 29) a au moins un élément de positionnement (32, 39) qui pénètre dans le dégagement (7) de l'éclisse intérieure (21) ou de l'éclisse extérieure (22), et au moins un élément de butée (33), qui pénètre partiellement dans le dégagement (8) de la pièce de maillon de chaîne (9) en une pièce.

32. Chaîne de conduite d'énergie selon la revendication 31, **caractérisée en ce que** les pièces de liaison (28, 29) s'encliquètent l'une avec l'autre, de préférence de manière détachable.

33. Chaîne de conduite d'énergie selon la revendication 32, **caractérisée en ce que** les éléments de butée (40) de l'une pièce de liaison (29) ont des logements (44) et les éléments de butée (33) de l'autre élément de liaison (28) ont des éléments à encliquetage (36), qui s'engagent dans les logements (44).
